# EUROPEAN PATENT APPLICATION

(11) **EP 4 607 046 A1**
(43) Date of publication of application: **27.08.2025**
(21) Application number: 23899418.0
(22) Date of filing: 19.07.2023
(51) Int. Cl.: F16C 32/04, F16H 57/04

(54) **MAGNETIC BEARING AND MAGNETIC BEARING SYSTEM**

(30) Priority: 07.12.2022 CN 202211566717
(71) Applicant: Gree Electric Appliances, Inc. of Zhuhai, Zhuhai, Guangdong 519031 (CN)
(72) Inventor: GUO, Weilin, Zhuhai, Guangdong 519031 (CN); GONG, Gao, Zhuhai, Guangdong 519031 (CN); WANG, Jianhui, Zhuhai, Guangdong 519031 (CN); LI, Xin, Zhuhai, Guangdong 519031 (CN)
(74) Representative: Zacco GmbH
(86) International application number: PCT/CN2023/108157
(87) International publication number: WO 2024/119833

(57) **Abstract**

A magnetic bearing includes: a bearing housing (1), an axial bearing (2) and a radial bearing (3). The axial bearing (2) and the radial bearing (3) are arranged along an axial direction of a rotating shaft (5). The axial bearing (2) comprises an axial bearing rotor (501). The radial bearing (3) comprises a radial bearing rotor (502). The axial bearing rotor (501) is provided at an outer circumference of the rotating shaft (5) and rotates integrally with the rotating shaft (5). The radial bearing rotor (502) is provided at the outer circumference of the rotating shaft (5) and rotates integrally with the rotating shaft (5). The axial bearing rotor (501) is connected to the radial bearing rotor (502) in the axial direction of the rotating shaft (5). The axial bearing (2) acts on the rotating shaft (5) through the axial bearing rotor (501), and the radial bearing (3) acts on the rotating shaft (5) through the radial bearing rotor (502). The radial size of the magnetic bearing can be reduced, and the inherent frequency of the rotors is increased, such that the strength of the bearing rotors can effectively meet requirements at high power and high rotating speed, and the magnetic bearing can be suitable for a high-power and ultra-high-speed magnetic levitation system, and is more suitable for the high-speed field. The present invention further relates to a magnetic bearing system.

## Description

The present invention claims the priority to the Chinese patent application No. 202211566717.3, titled "MAGNETIC BEARING AND MAGNETIC BEARING SYSTEM", filed to the Patent Office of the People's Republic of China on December 7, 2022, which is incorporated herein in its entirety by reference.

### Technical Field

The present invention relates to the technical field of a magnetic bearing, and particularly relates to a magnetic bearing and a magnetic bearing system.

### Background

A magnetic bearing is a new bearing that uses an electromagnetic force to levitate a shaft. A radial and axial integrated bearing provides a new design idea for the design of a small-size bearing. However, for practical industrial applications, a bearing assembly solution which involves how to arrange radial and axial bearings to allow a rotor to have better dynamic characteristics and to render the bearings simple in structure and easy to assemble, and which can take into account electrical, bearing cooling, rotor characteristics, etc. is a design challenge.

The patent application No. CN 109707735 A in the prior art discloses a magnetic bearing, as shown in Fig. 1 - a prior art drawing. The magnetic bearing includes an axial magnetic bearing stator, a rotor pack 53, a thrust disc 52, a stator pack 14, permanent-magnet bias magnetic steel 12, a magnetic conducting ring 11, an axial control coil 221 and a radial control coil 15. An outer side of the stator pack 14 is sleeved with the permanent-magnet bias magnetic steel 12. An outer side of the permanent-magnet bias magnetic steel 12 is sleeved with the magnetic conducting ring 11. The axial control coil 221 is provided between an upper magnetic pole 21 and a lower magnetic pole 3, and is configured to generate an axial control magnetic flux, so as to control an axial movement of the magnetic bearing. The radial control coil 15 is provided on the stator pack 14, and is configured to generate a radial control magnetic flux, so as to control a radial movement of the magnetic bearing, thereby reducing a rotor eddy current loss of the magnetic bearing through permanent magnet biasing.

Although the axial size of such bearing structure is small, the outer diameter of its radial bearing rotor is large. When the rotor operates at high power and high rotating speed, the strength of the bearing rotor is often unable to meet the requirements, or when the strength requirements are met, the assembly demands are often unable to be met. Therefore, the structure of this solution is not suitable for a high-power, ultra-high-speed magnetic levitation system.

The radial size of the magnetic bearing in the related art is too large, so that the strength of the bearing rotor cannot meet the requirements at high power and high rotating speed, and it is not suitable for a high-power and ultra-high-speed magnetic levitation system. Therefore, the present invention researches and designs a magnetic bearing and a magnetic bearing system.

### Summary

Therefore, the technical problem to be solved by the present invention is to overcome the defect of an excessive radial size of a magnetic bearing in the related art, thereby providing a magnetic bearing and a magnetic bearing system.

In order to solve the above problem, the present invention provides a magnetic bearing includes:
a bearing housing, an axial bearing and a radial bearing, wherein the axial bearing and the radial bearing are arranged along an axial direction of a rotating shaft; the axial bearing includes an axial bearing rotor; the radial bearing includes a radial bearing rotor; the axial bearing rotor is provided at an outer circumference of the rotating shaft and rotates integrally with the rotating shaft; the radial bearing rotor is provided at the outer circumference of the rotating shaft and rotates integrally with the rotating shaft; the axial bearing rotor is connected with the radial bearing rotor in the axial direction of the rotating shaft; the axial bearing acts on the rotating shaft through the axial bearing rotor; and the radial bearing acts on the rotating shaft through the radial bearing rotor.

In some embodiments, the axial bearing includes an axial bearing stator, and the radial bearing includes a radial bearing stator, wherein at least part of the axial bearing stator is located at an outer circumference of the axial bearing rotor, and at least part of the radial bearing stator is located at an outer circumference of the radial bearing rotor. The magnetic bearing further includes a magnetic steel which is located between the axial bearing stator and the radial bearing stator and which is configured to provide bias magnetic circuits for the axial bearing and the radial bearing respectively.

In some embodiments, along the axial direction of the rotating shaft, one end of the magnetic steel is connected with the axial bearing stator, and an other end of the magnetic steel is connected with the radial bearing stator. A magnetic circuit generated by the magnetic steel passes through the axial bearing stator, the axial bearing rotor, the radial bearing rotor, the radial bearing stator and the magnetic steel to form a bias magnetic flux loop.

In some embodiments, the axial bearing stator includes a front axial core, an axial winding frame, an axial winding and a rear axial core, wherein a radial outer end of the front axial core is connected with a radial outer end of the rear axial core. A first accommodating space is enclosed by a radial inner end of the front axial core and a radial inner end of the rear axial core, and the axial winding frame is provided in the first accommodating space. The axial winding is wound on the axial winding frame, and an axial control magnetic circuit generated by the axial winding passes through the rear axial core, the axial bearing rotor and the front axial core to form an axial control magnetic loop.

In some embodiments, the rear axial core is of an annular disc-shaped structure, and the front axial core is also of an annular structure and includes a first annular part, a first cylindrical part and a second annular part, wherein the first cylindrical part is a cylinder, with one axial end of the first cylindrical part being connected with a radial inner end of the first annular part, and an other axial end of the first cylindrical part being connected with a radial outer end of the second annular part. An outer diameter of the first annular part is greater than an outer diameter of the second annular part, and an inner diameter of the first annular part is greater than an inner diameter of the second annular part. The first accommodating space is enclosed by the first cylindrical part, the second annular part and the rear axial core.

In some embodiments, the radial bearing stator includes a radial ring, a radial stator core and a radial winding, wherein the radial stator core is located at an inner circumference of the radial ring, the radial winding is wound on the radial stator core, and a radial control magnetic circuit generated by the radial winding passes through the radial stator core and the radial bearing rotor to form a radial control magnetic loop.

In some embodiments, the radial stator core is of an annular disc-shaped structure, and the radial ring is also of an annular structure and includes a third annular part and a second cylindrical part, wherein the second cylindrical part is a cylinder, one axial end of the second cylindrical part is connected with a radial outer end of the third annular part, and a second accommodating space for accommodating the radial stator core is enclosed by the second cylindrical part and the third annular part.

In some embodiments, a magnetic circuit generated by the magnetic steel passes through the rear axial core, the axial bearing rotor, the radial bearing rotor, the radial stator core, the radial ring and the magnetic steel to form a first bias magnetic flux loop, and a magnetic circuit generated by the magnetic steel passes through the rear axial core, the front axial core, the axial bearing rotor, the radial bearing rotor, the radial stator core, the radial ring and the magnetic steel to form a second bias magnetic flux loop.

In some embodiments, the bearing housing is of a cylindrical structure, and includes therein a first space for accommodating the axial bearing and a second space for accommodating the radial bearing, wherein an inner diameter of an inner wall of the first space is greater than an inner diameter of an inner wall of the second space. A step structure is formed at a connection of the first space and the second space and includes a first end surface of the bearing housing. The axial bearing abuts against the first end surface of the bearing housing. The inner wall of the second space is formed as a first cylinder surface of the bearing housing.

In some embodiments, the magnetic bearing further includes a baffle. An axial end of the bearing housing located at the second space is provided with an annular sinking groove. A bottom of the annular sinking groove forms a second end surface of the bearing housing, and the baffle is provided on the second end surface of the bearing housing.

In some embodiments, when the axial bearing includes a rear axial core, the rear axial core abuts against the first end surface of the bearing housing. When the radial bearing includes a radial ring, the radial ring is connected with the first cylinder surface of the bearing housing. A radial bearing positioning hole is further provided in a portion of the bearing housing opposite to the second space, and penetrates from an outer wall to an inner wall of the bearing housing.

In some embodiments, a housing through hole is further provided in the bearing housing, axially penetrates from the first end surface of the bearing housing to the second end surface of the bearing housing, and is configured to position the axial bearing;
a housing outlet hole is further provided in the bearing housing, and penetrates from an inner wall to an outer wall of the bearing housing; and
the axial bearing further includes an axial bearing lead-out wire, and the radial bearing further includes a radial bearing lead-out wire. One end of the axial bearing lead-out wire is connected with the axial winding, and an other end of the axial bearing lead-out wire is led out of the housing outlet hole. One end of the radial bearing lead-out wire is connected with the radial winding, and an other end of the radial bearing lead-out wire passes through the housing through hole and the housing outlet hole in sequence and is led out.

The present invention further provides a magnetic bearing system which includes the magnetic bearing according to any one of the preceding embodiments, and further includes a cooling channel capable of cooling the axial bearing and the radial bearing.

In some embodiments, when the bearing housing is of a cylindrical structure, and includes therein a first space for accommodating the axial bearing and a second space for accommodating the radial bearing: a housing cooling hole is provided in the bearing housing in a manner of penetrating from an outer wall to an inner wall of the bearing housing; and
when the axial bearing includes an axial bearing stator, and the radial bearing includes a radial bearing stator:
the cooling channel includes a first cooling channel and a second cooling channel, the housing cooling hole is opposite to and is communicated with the first space, the first cooling channel includes a first axial cooling hole and a second axial cooling hole, the first axial cooling hole axially penetrates through the axial bearing stator, and the second axial cooling hole axially penetrates through the radial bearing stator; and
the second cooling channel includes a radial cooling hole, a third axial cooling hole and a fourth axial cooling hole, the radial cooling hole radially penetrating through the axial bearing stator, the third axial cooling hole axially penetrating through the axial bearing rotor, and the fourth axial cooling hole axially penetrating through the radial bearing rotor.

In some embodiments, when the axial bearing stator includes a front axial core, an axial winding frame, an axial winding and a rear axial core, the first axial cooling holes are axially and oppositely provided in the front axial core, the rear axial core and the axial winding frame. When the radial bearing includes a radial stator core and a radial ring, the second axial cooling holes are axially and oppositely provided in the radial stator core and the radial ring.

In some embodiments, when the axial bearing stator includes a front axial core, an axial winding frame, an axial winding and a rear axial core, the radial cooling hole is radially provided in a portion of the rear axial core opposite to the housing cooling hole. The radial cooling hole penetrates from a radial outer end to a radial inner end of the rear axial core. The third axial cooling hole and the fourth axial cooling hole are provided oppositely along an axial direction.

The magnetic bearing and the magnetic bearing system provided by the present invention have the following advantageous effects:
1. In the present invention, the axial bearing is configured to include an axial bearing rotor, and the radial bearing is configured to include a radial bearing rotor. The axial bearing rotor and the radial bearing rotor are located at the outer circumference of the rotating shaft and are connected with each other in the axial direction, so that the axial bearing acts on the rotating shaft through the axial bearing rotor, and the radial bearing acts on the rotating shaft through the radial bearing rotor. Compared with the fact that the axial bearing and the radial bearing share a rotor in an art known to the inventors, the axial bearing and the radial bearing are distributed along the axial direction and are arranged as the bearingthrough their own rotors, so that a structural superposition of the axial bearing stator and the radial bearing stator in the radial direction due to the sharing of the rotor can be reduced effectively, thereby effectively reducing a radial size of the magnetic bearing and increasing an inherent frequency of the rotor, so that the strength of the bearing rotor can effectively meet requirements at high power and high rotating speed, and the magnetic bearing can be suitable for a high power and ultra-high speed magnetic levitation system, and is more suitable for a high-speed field; and
2. The present invention also provides the magnetic steel between the axial bearing stator and the radial bearing stator, the bias magnetic circuits can be provided for the axial bearing and the radial bearing simultaneously and respectively by the magnetic steel, such that the axial bearing and the radial bearing share the magnetic steel structure, forming a hybrid three-degree-of-freedom bearing structure with low heat generation and low loss. Compared with the solution in the art known to the inventors where the radial bearing and the axial bearing are separated from each other, a size in the axial direction can be effectively reduced. With a reasonable arrangement of bearings, requirements of bearing assembly are met, the rotor has a higher modal frequency, and the magnetic bearing can be further applied to a field of ultra-high-speed magnetic levitation. The magnetic bearing is simple in structure, low in manufacturing cost, and suitable for popularization and wide application on various rotating machines supported by the magnetic bearing. The magnetic bearing is strong in implementability and simple in assembly, can be widely applied in the field of ultra-high-speed magnetic levitation, and also has positive reference value for an industrial application of ultra-high-speed magnetic bearings.

### Brief Description of the Drawings

Fig. 1 illustrates an overall cross-sectional view of a magnetic bearing in the related art;
Fig. 2 illustrates a longitudinal sectional view of a magnetic bearing system of the present invention;
Fig. 2a illustrates a left view of Fig. 2;
Fig. 3 illustrates an exploded structural diagram of a magnetic bearing of the present invention;
Fig. 3a illustrates a complete assembly structural diagram of the magnetic bearing of Fig. 3;
Fig. 4 illustrates a schematic structural diagram of magnetic circuits of a magnetic bearing of the present invention;
Fig. 4a illustrates a partial enlarged view of part A of Fig. 4;
Fig. 5 illustrates a schematic diagram of a appearence structure of a magnetic bearing of the present invention;
Fig. 6 illustrates a partial longitudinal sectional view and a schematic diagram of a cooling structure of a magnetic bearing of the present invention;
Fig. 6a illustrates a longitudinal sectional view of a bearing housing in Fig. 6;
Fig. 6b illustrates a perspective view of the bearing housing of Fig. 6a;
Fig. 7 illustrates a diagram of a cooling flow channel at a rear axial core of a magnetic bearing system of the present invention; and
Fig. 7a illustrates a cross-sectional view taken along the wire A-A in Fig. 7.

### Reference numerals:

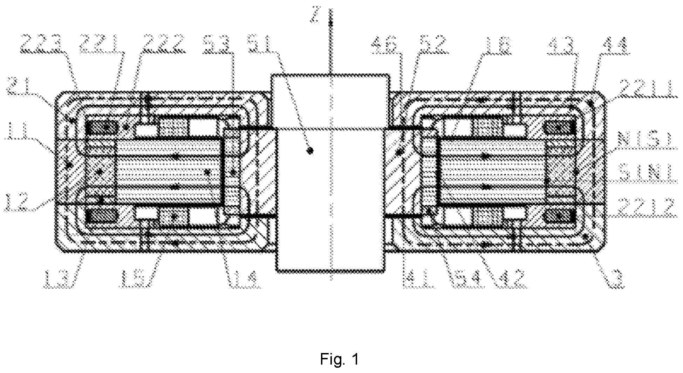

Fig. 1: 1, Permanent magnet; 2, Rotor core; 3, Axial control winding; 5, Axial core.

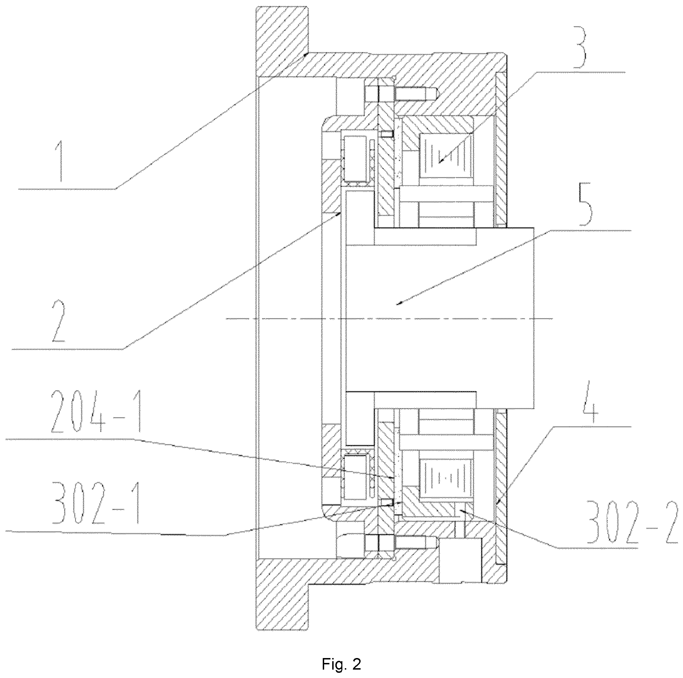

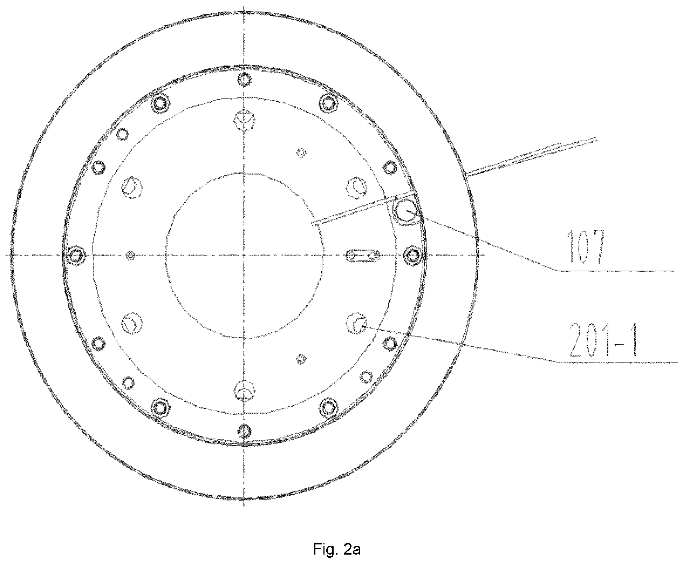

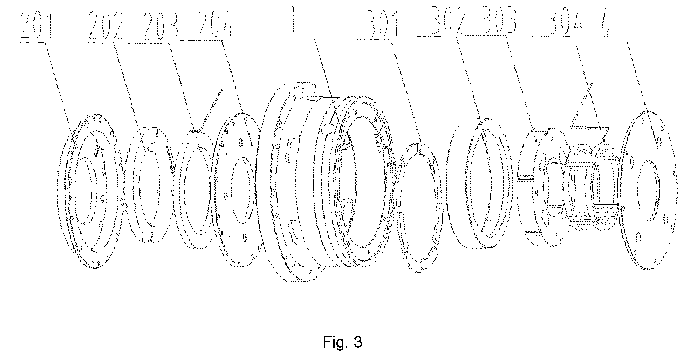

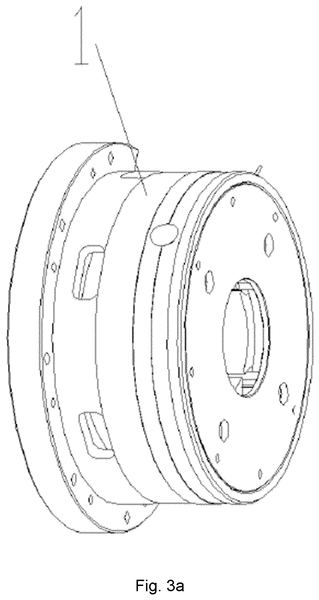

Figs. 2-7a: 1, Bearing housing; 101, Housing outlet hole; 102, First end surface of the bearing housing; 103, First cylinder surface of the bearing housing; 104, Housing cooling hole; 105, Second end surface of the bearing housing; 106, Radial bearing positioning hole; 107, Housing through hole; 108, First space; 109, Second space; 2, Axial bearing; 201, Front axial core; 2011, First annular part; 2012, First cylindrical part; 2013, Second annular part; 201-1, Axial bearing cooling hole; 202, Axial winding frame; 203, Axial winding; 204, Rear axial core; 204-1, First end surface of an axial bearing; 204-2, Radial cooling hole; 206, Axial bearing lead-out wire; 501, Axial bearing rotor; 3, Radial bearing; 301, Magnetic steel; 302, Radial ring; 3021, Third annular part; 3022, Second cylindrical part; 302-1, First radial bearing end surface; 302-2, Radial bearing positioning hole; 303, Radial stator core; 304, Radial winding; 306, Radial bearing lead-out wire; 502, Radial bearing rotor; 4, Baffle; 23, Bias magnetic circuit; 205, Axial control magnetic circuit; 305, Radial control magnetic circuit; 306, Radial bearing lead-out wire; 5, Rotating shaft; 6, First cooling gas loop; 7, Second cooling gas loop; 8, Rotor hot air; 9, Cooling gas outlet.

### Detailed Description of the Embodiments

As shown in Figs. 2-7a, the present invention provides a magnetic bearing (preferably a three-degree-of-freedom magnetic bearing structural assembly, mainly applied in a magnetic levitation motor product), which includes:
a bearing housing 1, an axial bearing 2 and a radial bearing 3, wherein the axial bearing 2 and the radial bearing 3 are arranged along an axial direction of a rotating shaft 5; the axial bearing 2 includes an axial bearing rotor 501; the radial bearing 3 includes a radial bearing rotor 502; the axial bearing rotor 501 is provided at an outer circumference of the rotating shaft 5 and rotates integrally with the rotating shaft 5; the radial bearing rotor 502 is provided at the outer circumference of the rotating shaft 5 and rotates integrally with the rotating shaft 5; the axial bearing rotor 501 is connected with the radial bearing rotor 502 in an axial direction of the rotating shaft 5; the axial bearing 2 acts on the rotating shaft 5 through the axial bearing rotor 501; and the radial bearing 3 acts on the rotating shaft 5 through the radial bearing rotor 502.

In the present invention, the axial bearing is configured to include the axial bearing rotor, and the radial bearing is configured to include the radial bearing rotor. The axial bearing rotor and the radial bearing rotor are located at the outer circumference of the rotating shaft and are connected with each other in the axial direction, so that the axial bearing acts on the rotating shaft through the axial bearing rotor, and the radial bearing acts on the rotating shaft through the radial bearing rotor. Compared with the fact that the axial bearing and the radial bearing share a rotor in the related art, the axial bearing and the radial bearing are distributed along the axial direction and act on the magnetic bearing through their own rotors, so that a structural superposition of an axial bearing stator and a radial bearing stator in a radial direction due to a sharing of the rotor can be reduced effectively, thereby effectively reducing a radial size of the magnetic bearing and increasing the inherent frequency of the rotor, so that the strength of a bearing rotor can effectively meet requirements at high power and high rotating speed, and the magnetic bearing can be suitable for a high power and ultra-high speed magnetic levitation system, and is more suitable for a high-speed field.

The present invention proposes a three-degree-of-freedom magnetic bearing assembly structure. Through a structural combination of radial and axial bearings, radial and axial sizes of a bearing are reduced. With a reasonable arrangement of the bearings, requirements of bearing assembly are met. With the design of a cooling flow channel, a cooling efficiency of the magnetic bearing is improved. A feasible design idea is provided for a industrial application of the magnetic bearing.

The advantageous effects are as follows:
1. The magnetic bearing of the present invention adopts a three-degree-of-freedom bearing structure, which can shorten radial and axial lengths of the rotor. Compared with the background art, the radial size is smaller, and compared with an ordinary magnetic bearing in which the radial and axial bearings are separated, the axial size is reduced, such that the inherent frequency of the rotor is effectively increased, a problem of an insufficient inherent frequency of the rotor at a high speed is solved, and the rotor has a higher modal frequency and is more suitable for the high-speed field;
2. The present invention adopts the hybrid three-degree-of-freedom bearing structure with low heat generation and low loss;
3. The magnetic bearing is simple in structure, low in manufacturing cost, and suitable for popularization and wide application on various rotating machines supported by the magnetic bearing; and
4. The magnetic bearing is strong in implementability and simple in assembly, can be widely applied in a field of ultra-high-speed magnetic levitation, and also has positive reference value for an industrial application of ultra-high-speed magnetic bearings.

In some embodiments, the axial bearing 2 includes an axial bearing stator, and the radial bearing 3 includes a radial bearing stator. At least part of the axial bearing stator is located at an outer circumference of the axial bearing rotor 501, and at least part of the radial bearing stator is located at an outer circumference of the radial bearing rotor 502. The magnetic bearing further includes a magnetic steel 301 which is located between the axial bearing stator and the radial bearing stator and which is configured to provide bias magnetic circuits for the axial bearing and the radial bearing respectively.

The present invention also provides the magnetic steel between the axial bearing stator and the radial bearing stator, the bias magnetic circuits can be provided for the axial bearing and the radial bearing simultaneously and respectively by the magnetic steel, such that the axial bearing and the radial bearing share the magnetic steel structure, forming the hybrid three-degree-of-freedom bearing structure with low heat generation and low loss. Compared with the solution in the related art where the radial bearing and the axial bearing are separated from each other, the size in the axial direction can be effectively reduced. With the reasonable arrangement of the bearings, the requirements of bearing assembly are met, the rotor has a higher modal frequency, and the magnetic bearing can be further applied to the field of ultra-high-speed magnetic levitation. The magnetic bearing is simple in structure, low in manufacturing cost, and suitable for popularization and wide application on various rotating machines supported by the magnetic bearing. The magnetic bearing is strong in implementability and simple in assembly, can be widely applied in the field of ultra-high-speed magnetic levitation, and also has positive reference value for the industrial application of ultra-high-speed magnetic bearings.

In some embodiments, along the axial direction of the rotating shaft 5, one end of the magnetic steel 301 is connected with the axial bearing stator, and an other end of the magnetic steel 301 is connected with the radial bearing stator. A magnetic circuit generated by the magnetic steel 301 passes through the axial bearing stator, the axial bearing rotor 501, the radial bearing rotor 502, the radial bearing stator and the magnetic steel 301 to form a bias magnetic flux loop. A further preferred structural form of the magnetic steel of the present invention is as follows: one axial end of the magnetic steel is connected with the axial bearing stator, and an other axial end thereof is connected with the radial bearing stator, such that the bias magnetic circuits generated by the magnetic steel can pass through the axial stator and the radial bearing stator, and form a bias magnetic flux loop through the axial bearing rotor and the radial bearing rotor, thereby achieving an effect of providing bias magnetic circuits to the axial bearing and the radial bearing at the same time.

The bias magnetic circuits 23 provided by the magnetic steel 301 is a closed loop formed by the magnetic steel, the front/rear axial cores, an axial air gap, a rotor, the radial stator and the magnetic steel, providing a bias in both the radial and axial directions. An axial control magnetic circuit 205 is a closed loop formed by the front axial core, an air gap, the rotor and the rear axial core, and a plane where the loop is located is parallel to an axis of the rotor. A radial control magnetic circuit 305 is a radial control loop magnetic circuit formed by the radial stator, a radial air gap, the rotor, the radial air gap and the radial stator, and a plane where the loop is located is perpendicular to the axis.

In some embodiments, the axial bearing stator includes the front axial core 201, an axial winding frame 202, an axial winding 203 and the rear axial core 204, wherein a radial outer end of the front axial core 201 is connected with a radial outer end of the rear axial core 204. A first accommodating space is enclosed by a radial inner end of the front axial core 201 and a radial inner end of the rear axial core 204, and the axial winding frame 202 is provided in the first accommodating space. The axial winding 203 is wound on the axial winding frame 202, and is opposite to the axial bearing rotor 501 in the radial direction (may be over against or nearly over against or not over against, as long as the axial control magnetic circuit can be provided to pass through the axial bearing rotor). The axial control magnetic circuit generated by the axial winding 203 passes through the rear axial core 204, the axial bearing rotor 501 and the front axial core 201 to form an axial control magnetic loop.

A preferred structural form of the axial bearing stator of the present invention is as follows: it comprises a front axial core 201, an axial winding frame 202, an axial winding 203 and a rear axial core 204. The first accommodating space where the axial winding frame is provided can be enclosed by the front axial core and the rear axial core. The axial winding is wound on the axial winding frame, such that the axial control magnetic circuit is formed on the rear axial core, the axial bearing rotor and the front axial core by the axial winding, thus forming control over an offset or movement of the rotating shaft in the axial direction.

In some embodiments, the rear axial core 204 is of an annular disc-shaped structure, and the front axial core 201 is also of an annular structure. The front axial core 201 includes a first annular part 2011, a first cylindrical part 2012 and a second annular part 2013. The first cylindrical part 2012 is a cylinder. One axial end of the first cylindrical part 2012 is connected with a radial inner end of the first annular part 2011, and an other axial end of the first cylindrical part 2012 is connected with a radial outer end of the second annular part 2013. An outer diameter of the first annular part 2011 is greater than an outer diameter of the second annular part 2013, and an inner diameter of the first annular part 2011 is greater than an inner diameter of the second annular part 2013. The first accommodating space is enclosed by the first cylindrical part 2012, the second annular part 2013 and the rear axial core 204.

A further preferred structural form of the front and rear axial cores of the present invention is as follows: the rear axial core is of an annular disc-shaped structure, and the front axial core includes the first annular part, the second annular part and the first cylindrical part, such that the first accommodating space for accommodating the axial winding frame is enclosed by the first cylindrical part, the second annular part and the rear axial core.

An axial frame mounting groove is provided inside the front axial core 201 of the present invention, and the axial winding frame 202 is fixed on the front axial core 201 through the mounting groove. The axial winding 203 is wound inside the axial winding frame 202, and a control magnetic flux in the axial direction is provided by the axial winding 203. A magnetic steel fixing frame is provided on a first end surface of an axial bearing 204-1 of the rear axial core 204 and is mounted on the first end surface of an axial bearing 204-1 through screws, and the magnetic steel 301 is mounted on the rear axial core. A radial stator core 303 is of a 4-magnetic-pole structure, with each magnetic pole being wound with one radial winding 304. Two opposite control windings are connected in series to provide a control magnetic flux in the radial direction. The radial stator core 303 is sleeved with a radial ring 302 which is sleeved with a first cylinder surface of the bearing housing 103 of the bearing housing. The magnetic steel 301 is located between the radial ring 302 and the rear axial core 204, with one side being in contact with a first end surface of the rear axial core 204, and an other side being in contact with a first end surface of the radial ring 302.

In some embodiments, the radial bearing stator includes the radial ring 302, the radial stator core 303 and the radial winding 304, wherein the radial stator core 303 is located at an inner circumference of the radial ring 302, and the radial winding 304 is wound on the radial stator core 303 and is opposite to the radial bearing rotor 502 in the radial direction (may be over against or nearly over against or not over against, as long as the radial control magnetic circuit can be provided to pass through the radial bearing rotor). The radial control magnetic circuit generated by the radial winding 304 passes through the radial stator core 303 and the radial bearing rotor 502 to form a radial control magnetic loop.

A preferred structural form of the radial bearing stator of the present invention is as follows: it comprises a radial stator core 303 and a radial ring 302. A second accommodating space where the radial stator core is provided can be enclosed by the radial ring, and the radial winding is wound on the radial stator core, such that the radial control magnetic circuit is formed on the radial stator core, the radial ring and the radial bearing rotor by the radial winding, so as to form a radial control magnetic circuit, thereby forming control over the offset or movement of the rotating shaft in the radial direction.

In some embodiments, the radial stator core 303 is of an annular disc-shaped structure, and the radial ring 302 is also of an annular structure and includes a third annular part 3021 and a second cylindrical part 3022, wherein the second cylindrical part 3022 is a cylinder. One axial end of the second cylindrical part 3022 is connected with a radial outer end of the third annular part 3021. A second accommodating space for accommodating the radial stator core 303 is enclosed by the second cylindrical part 3022 and the third annular part 3021. A further preferred structural form of the radial stator core and the radial ring of the present invention is as follows: the radial stator core is of an annular disc-shaped structure, and the radial ring includes the third annular part and the second cylindrical part, such that the second accommodating space for accommodating the radial stator core is enclosed by the second cylindrical part and the third annular part.

In some embodiments, a magnetic circuit generated by the magnetic steel 301 passes through the rear axial core 204, the axial bearing rotor 501, the radial bearing rotor 502, the radial stator core 303, the radial ring 302 and the magnetic steel 301 to form a first bias magnetic flux loop, and a magnetic circuit generated by the magnetic steel 301 passes through the rear axial core 204, the front axial core 201, the axial bearing rotor 501, the radial bearing rotor 502, the radial stator core 303, the radial ring 302 and the magnetic steel 301 to form a second bias magnetic flux loop.

With the front and rear axial cores in the present invention, one part of the bias magnetic circuits forms a circulating magnetic circuit only through the rear axial core, and an other part of the bias magnetic circuits also forms a circulating magnetic circuit through the front axial core and the rear axial core, thereby enhancing a driving magnetic flux to the axial bearing rotor and improving an axial driving capability.

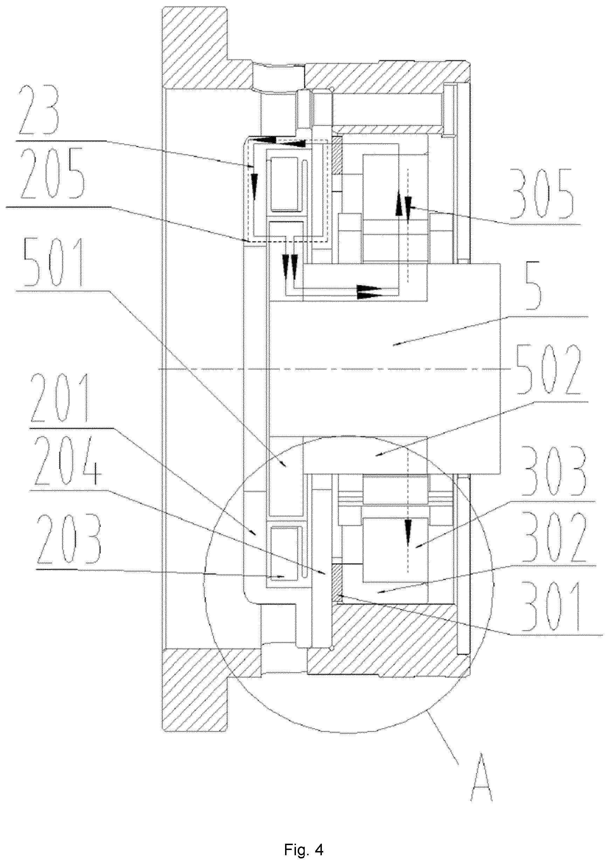

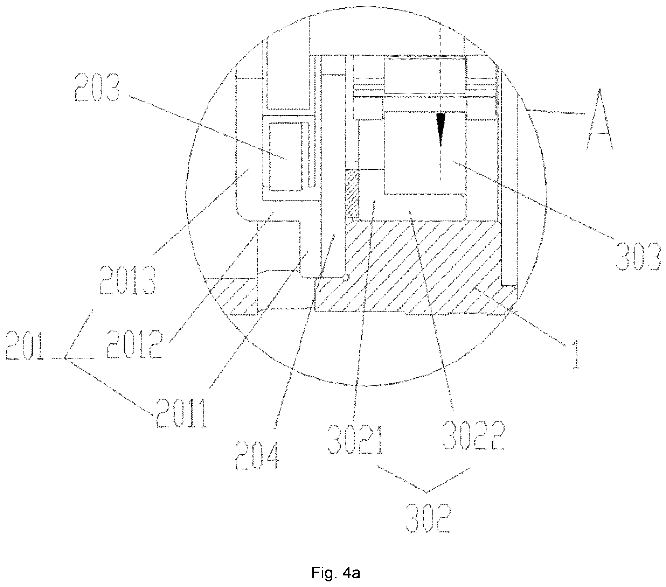

A schematic diagram of the magnetic circuit of the bearing is as shown in Fig. 4. The bias magnetic circuits 23 provided by the magnetic steel 301 is a closed loop formed by the magnetic steel, the front/rear axial cores, the axial air gap, the rotor, the radial stator and the magnetic steel by means of axial magnetization with the N pole facing the rear axial core, providing a bias in both the radial and axial directions. The axial control magnetic circuit 205 is a closed loop formed by the front axial core, the air gap, the rotor and the rear axial core, and the plane where the loop is located is parallel to the axis of the rotor. The radial control magnetic circuit 305 is the radial control loop magnetic circuit formed by the radial stator, the radial air gap, the rotor, the radial air gap and the radial stator, and the plane where the loop is located is perpendicular to the axis.

In some embodiments, the bearing housing 1 is of a cylindrical structure, and includes therein a first space 108 for accommodating the axial bearing 2 and a second space 109 for accommodating the radial bearing 3, wherein an inner diameter of an inner wall of the first space 108 is greater than an inner diameter of an inner wall of the second space 109. A step structure is formed at a connection of the first space 108 and the second space 109 and includes a first end surface of the bearing housing 102, and the axial bearing 2 abuts against the first end surface of the bearing housing 102. The inner wall of the second space is formed as a first cylinder surface of the bearing housing 103.

A preferred structural form of the bearing housing of the present invention is as follows: the first space and the second space can accommodate the axial bearing and the radial bearing therein respectively, and the first end surface of the bearing housing of the step structure is formed at the connection of the first space and the second space and is configured to abut against the axial bearing, thereby providing an axial anti-thrust force to the axial bearing, and in turn acting on the rotating shaft to provide an axial anti-thrust force. The inner wall of the second space is formed as the first cylinder surface of the bearing housing that is connected with the radial bearing. The axial bearing 2 is mounted in the housing through the first end surface of the bearing housing 102 on the housing. The radial bearing 3 is mounted in the housing through the first cylinder surface of the bearing housing 103 on the housing. The radial bearing is disposed close to a motor. A thermal baffle 4 is mounted on the housing and located on a side of the radial bearing close to the motor, and is configured to block the heat transfer of a motor rotor to the bearing.

The bearing housing 1 of the present invention is made of a non-magnetic conducting material. The axial bearing 2 is mounted in the housing through the first end surface of the bearing housing 102 on the housing and is positioned in a circumferential direction through a housing through hole 107. The radial bearing 3 is mounted in the housing through the first cylinder surface of the bearing housing 103 on the housing and positioned in the circumferential direction through a radial bearing positioning hole 106. The radial bearing is arranged close to the motor. The thermal baffle 4 is mounted on the second end surface of the housing and located on the side of the radial bearing close to the motor, and is configured to block the heat transfer of the motor rotor to the bearing.

In some embodiments, the magnetic bearing further includes the baffle 4. An axial end of the bearing housing 1 located at the second space 109 is provided with an annular sinking groove. An bottom of the annular sinking groove forms the second end surface of the bearing housing 105, and the baffle 4 is provided on the second end surface of the bearing housing 105. According to the present invention, the baffle can also provide a heat insulation effect. Since the motor is provided on a side of the baffle away from the radial bearing, the baffle can effectively prevent heat generated by the motor from affecting a normal operation of the magnetic bearing.

In some embodiments, when the axial bearing 2 includes a rear axial core 204, the rear axial core 204 abuts against the first end surface of the bearing housing 102. When the radial bearing 3 includes a radial ring 302, the radial ring 302 is connected with the first cylinder surface of the bearing housing 103. A radial bearing positioning hole 106 is further provided in a portion of the bearing housing 1 opposite to the second space, and penetrates from an outer wall to an inner wall of the bearing housing 1.

According to the present invention, the radial bearing positioning hole can position a mounting position of the radial bearing. The rear axial core can abut against the first end surface of the bearing housing to form axial thrust and support. The radial ring is configured to support the radial stator core in the radial direction.

In some embodiments, the housing through hole 107 is further provided in the bearing housing 1, axially penetrates from the first end surface of the bearing housing 102 to the second end surface of the bearing housing 105, and is configured to position the axial bearing;
a housing outlet hole 101 is further provided in the bearing housing 1, and penetrates from the inner wall to the outer wall of the bearing housing 1; and
the axial bearing further includes an axial bearing lead-out wire 206, and the radial bearing further includes a radial bearing lead-out wire 306. One end of the axial bearing lead-out wire 206 is connected with the axial winding 203, and an other end of the axial bearing lead-out wire 206 is led out of the housing outlet hole 101. One end of the radial bearing lead-out wire 306 is connected with the radial winding 304, and an other end of the radial bearing lead-out wire 306 passes through the housing through hole 107 and the housing outlet hole 101 in sequence and is led out.

According to the present invention, the housing through hole provided in the bearing housing can achieve effectively positioning for a mounting of the axial bearing, and the radial bearing lead-out wire can be led out through the housing through hole, and led from the housing outlet hole to an outside of the bearing, while the axial bearing lead-out wire is directly led out through the housing outlet hole, thereby effectively achieving internal and external connections of lead-out wires of the magnetic bearing.

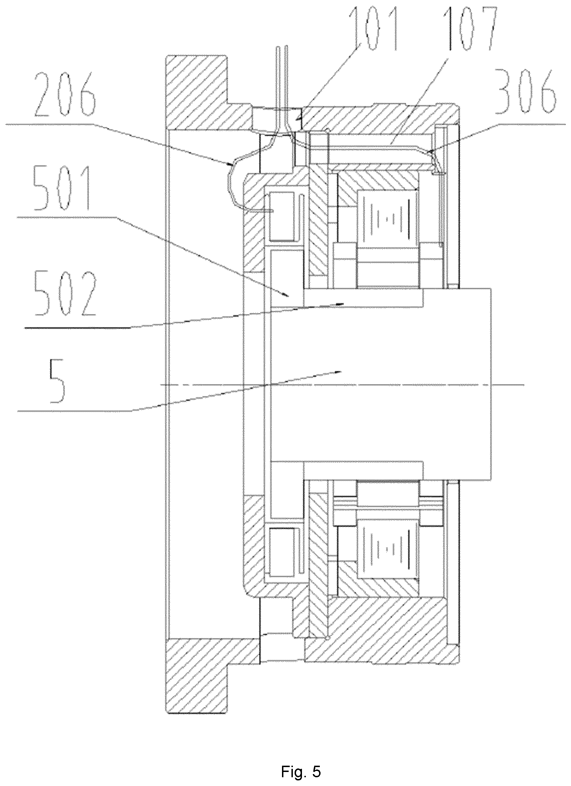

Fig. 5 shows a wire outgoing diagram of an existing magnetic bearing, in which the housing outlet hole 101 in the housing, the axial bearing lead-out wire 206 that is fixed on the front axial core via a wire clamp and is directly led out through the housing outlet hole 101 in the housing, and the radial bearing lead-out wire 306 that passes through the housing through hole 107 in the housing and is led out through the housing outlet hole 101.

The present invention further provides a magnetic bearing system which includes the magnetic bearing according to any one of the preceding embodiments, and further includes a cooling channel capable of cooling the axial bearing and the radial bearing. The present invention also provides the cooling channel that can cool both the axial bearing and the radial bearing during operation, ensuring that it is suitable for a high-speed operation condition.

In some embodiments, when the bearing housing 1 is of a cylindrical structure, and includes therein the first space for accommodating the axial bearing 2 and the second space for accommodating the radial bearing 3: a housing cooling hole 104 is provided in the bearing housing 1 in a manner of penetrating from the outer wall to the inner wall of the bearing housing 1; and
the cooling channel includes a first cooling channel and a second cooling channel, the housing cooling hole 104 is opposite to and communicated with the first space, the first cooling channel includes a first axial cooling hole and a second axial cooling hole, the first axial cooling hole axially penetrates through the axial bearing stator, and the second axial cooling hole axially penetrates through the radial bearing stator; and
the second cooling channel includes a radial cooling hole, a third axial cooling hole and a fourth axial cooling hole, the radial cooling hole radially penetrating through the axial bearing stator (preferably the rear axial core), the third axial cooling hole axially penetrating through the axial bearing rotor, and the fourth axial cooling hole axially penetrating through the radial bearing rotor.

A preferred structural form of the cooling channel of the present invention is as follows: the first cooling channel is configured to cool the axial bearing stator and the radial bearing stator. In some embodiments, the first axial cooling hole is configured to cool the axial bearing stator, the second axial cooling hole is configured to cool the radial bearing stator, and the second cooling channel is configured to cool the axial bearing rotor and the radial bearing rotor. In particular, the radial cooling hole is configured to introduce external cooling air to the axial bearing rotor and the radial bearing rotor. The third axial cooling hole can cool the axial bearing rotor, and the fourth axial cooling hole can cool the radial bearing rotor.

Two cooling channels of the present invention are: the first channel, i.e., an axial cooling circuit that cools bearing stators: the cooling gas passes through the housing, the axial bearing, the radial bearing, the thermal baffle, and ambient gas to form a loop; and the second channel, i.e., a radial cooling circuit that cools bearing rotors: the cooling gas passes through the housing, the rear axial core, the radial bearing rotor, the thermal baffle, and the ambient gas to form a loop.

In some embodiments, when the axial bearing includes the front axial core 201, the rear axial core 204 and the axial winding frame 202, the first axial cooling holes are axially and oppositely provided in the front axial core 201, the rear axial core 204 and the axial winding frame 202. When the radial bearing includes the radial stator core 303 and the radial ring 302, the second axial cooling holes are axially and oppositely provided in the radial stator core 303 and the radial ring 302.

A further preferred structural form of the first axial cooling hole and the second axial cooling hole of the present invention is as follows: the first axial cooling holes are axially and oppositely provided in the front axial core 201, the rear axial core 204 and the axial winding frame 202, so that cooling gas can pass through the front axial core 201, the rear axial core 204 and the axial winding frame in succession to cool them; and the second axial cooling holes are axially and oppositely provided in the radial stator core 303 and the radial ring 302, so that cooling gas can pass through the radial stator core 303 and the radial ring 302 in succession to cool them.

In some embodiments, when the axial bearing includes the rear axial core 204, the radial cooling hole 204-2 is radially provided in a portion of the rear axial core 204 opposite to the housing cooling hole 104, the radial cooling hole 204-2 penetrates from a radial outer end to a radial inner end of the rear axial core 204, and the third axial cooling hole and the fourth axial cooling hole are provided oppositely along the axial direction.

A preferred structural form of the radial cooling hole of the present invention is as follows: the radial cooling hole is provided inside the rear axial core and radially penetrates from the outer end to the inner end (the radial cooling hole is sealed from the outside in the axial direction), and can effectively introduce cooling gas in the axial direction from the housing cooling hole to cool the axial bearing rotor and the radial bearing rotor, and the third axial cooling hole and the fourth axial cooling hole are provided oppositely in the axial direction, which can ensure a flowability of the gas and improve a cooling effect on the axial and radial rotors. A plurality of penetrating radial cooling holes 204-2 are evenly arranged in the rear axial core 204 in the radial direction and are configured to cool the bearing rotors. The number of cooling holes needs to be appropriate. In practical use, a comprehensive evaluation can be carried out based on two indicators which are bearing heating condition and whether it will affect a performance of the magnetic bearing.

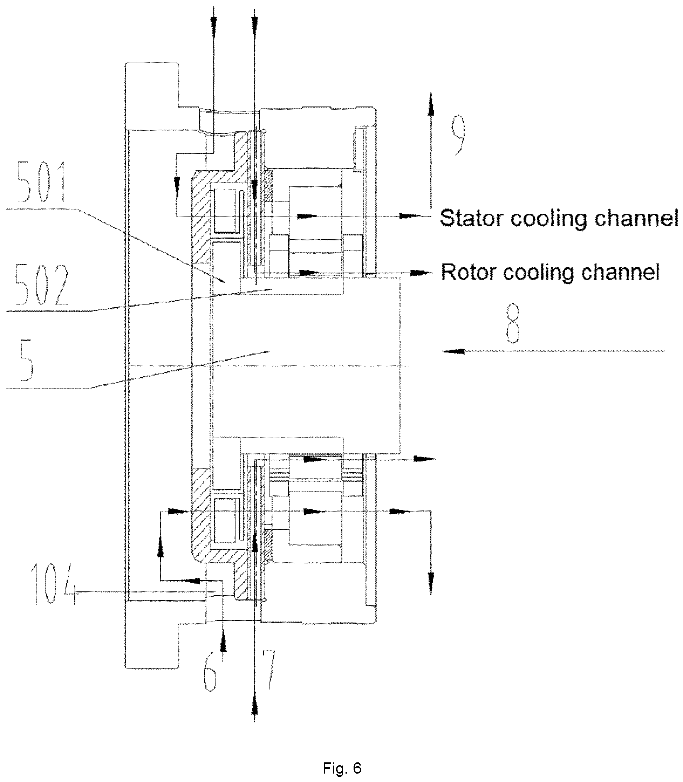

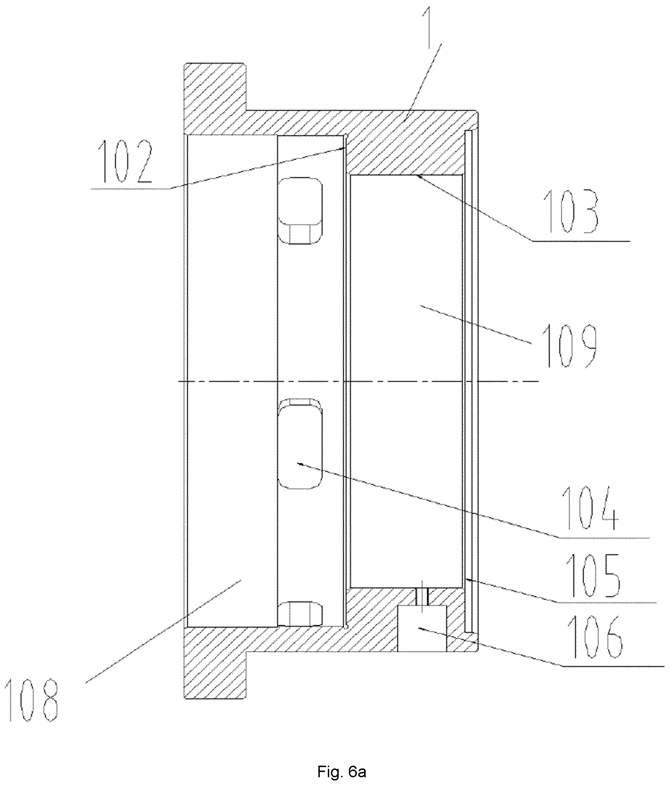

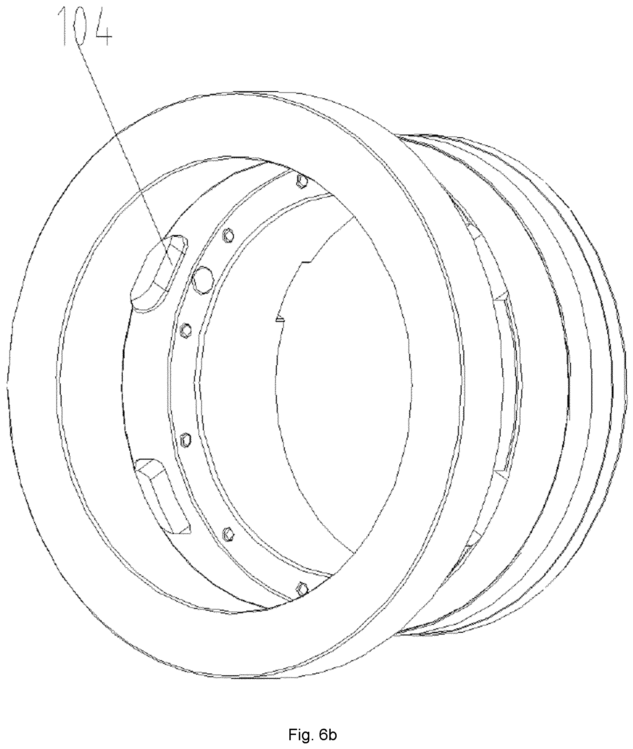

Fig. 6 shows a schematic diagram of cooling of an existing magnetic bearing in which the housing cooling holes 104 are arranged in a circumferential direction of the bearing housing 1. Their number may be determined according to demands, and their shapes may be round, waist-shaped, or other. The radial cooling holes 204-2 of the rear axial core are evenly arranged in the rear axial core and are arranged corresponding to the housing cooling holes 104. A rotating shaft 5, a first cooling gas loop 6, a second cooling gas loop 7, cooling gas flowing through a rotor (i.e. rotor hot air 8), and a cooling gas outlet 9. Cooling holes are provided in the front axial core 201, the rear axial core 204, the axial winding frame 202, the radial stator core 303, the radial ring 302, and an end surface of a thermal baffle 4. All the cooling holes are provided coaxially to form an axial cooling flow channel of the bearing, i.e., the first loop, which is configured to cool the bearing stators and a coil. A plurality of radial cooling holes are arranged radially in the rear axial core 204, and are arranged corresponding to the holes in the housing. Cooling gas flows to the rotors through the holes, and flows out through a stator-rotor air gap to form a radial cooling flow channel, i.e., the second loop, which is configured to cool the rotors. Above-mentioned axial and radial cooling channels together constitute a cooling system of the bearing, which can specifically cool the stators and the rotors of the bearing, and has a better cooling effect.

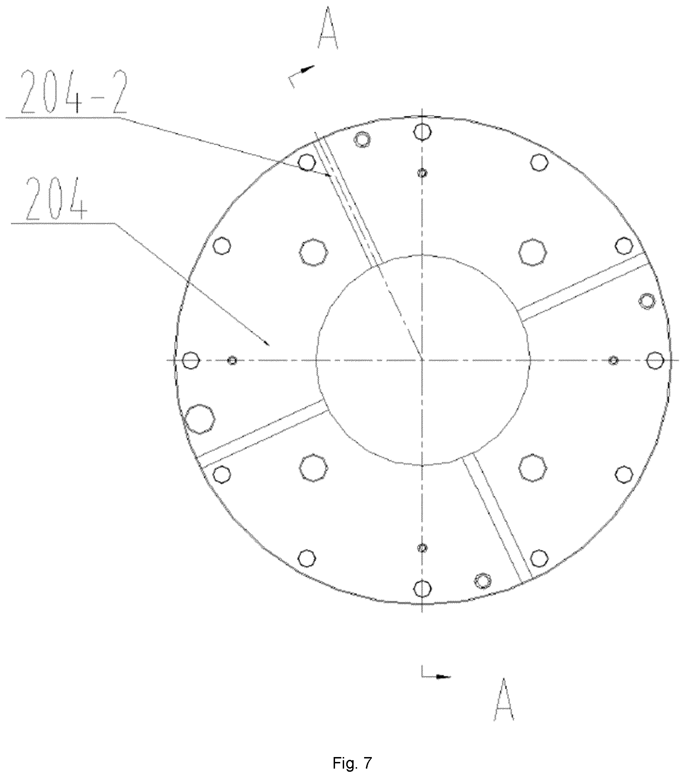

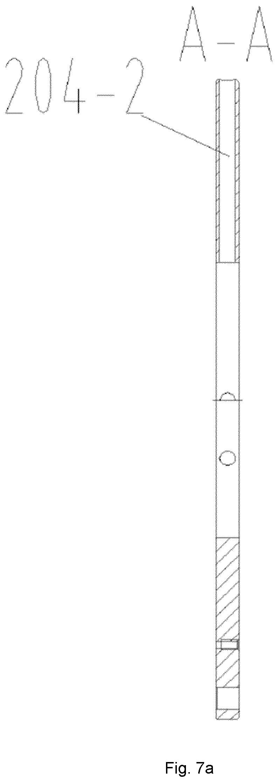

What is shown in Fig. 7 is an existing cooling flow channel of the rear axial core, in which the plurality of penetrating cooling holes are evenly arranged in the rear axial core 204 in the radial direction and are configured to cool the bearing rotors. The shape of the cooling holes may be round, waist-shaped or other. The number of the cooling holes may be determined based on a comprehensive evaluation of the two indicators which are the bearing heating condition and whether it will affect the performance of the magnetic bearing.

The working principle is as follows: there are four control windings wound around the radial stator core, and two opposite coils are connected in series to form a magnetic loop and provide radial control current; when a rotor is subject to a downward disturbance force and deviates from its equilibrium position, a displacement sensor detects a displacement of the rotor from its reference position; a controller converts a displacement signal into a control signal; current is provided to a control coil, and generated magnetic flux superimposes or weakens magnetic flux of the magnet; and a magnetic force acting on the rotor returns the rotor to the equilibrium position. In the axial direction, an axial coil provides axial control current. When the rotor is deflected to the right by a rightward disturbance force, an axial displacement sensor detects an offset and feeds a signal back to the axial bearing. Magnetic flux generated by the axial coil and the magnetic flux of the magnet are superimposed on the left side, and the magnetic force pulls the rotor back to the left. Similarly, regardless of whether the rotor is subject to an upward disturbance force, a leftward disturbance force or the rightward disturbance force, the rotor will be returned to the equilibrium position through a superposition of a control flux and a bias flux.

The above are only the preferred embodiments of the present invention and are not intended to limit the present invention. Any modification, equivalent replacement, improvement and the like made within the spirit and principle of the present invention shall be still encompassed in the scope of protection of the present invention. The above are only preferred embodiments of the present invention. It should be noted that for those of ordinary skill in the art, a number of improvements and variations may be made without departing from the principle of the present invention, and these improvements and variations should also be considered to fall within the scope of protection of the present invention.

## Claims

1. A magnetic bearing, comprising:
a bearing housing (1), an axial bearing (2) and a radial bearing (3), wherein the axial bearing (2) and the radial bearing (3) are provided along an axial direction of a rotating shaft (5); the axial bearing (2) comprises an axial bearing rotor (501); the radial bearing (3) comprises a radial bearing rotor (502); the axial bearing rotor (501) is provided at an outer circumference of the rotating shaft (5) and rotates integrally with the rotating shaft (5); the radial bearing rotor (502) is provided at the outer circumference of the rotating shaft (5) and rotates integrally with the rotating shaft (5); the axial bearing rotor (501) is connected with the radial bearing rotor (502) in the axial direction of the rotating shaft (5); the axial bearing (2) acts on the rotating shaft (5) through the axial bearing rotor (501); and the radial bearing (3) acts on the rotating shaft (5) through the radial bearing rotor (502).

2. The magnetic bearing according to claim 1, wherein:
the axial bearing (2) comprises an axial bearing stator; the radial bearing (3) comprises a radial bearing stator; at least part of the axial bearing stator is located at an outer circumference of the axial bearing rotor (501); at least part of the radial bearing stator is located at an outer circumference of the radial bearing rotor (502); the magnetic bearing further comprises a magnetic steel (301); the magnetic steel (301) is located between the axial bearing stator and the radial bearing stator; and the magnetic steel (301) is configured to provide bias magnetic circuits for the axial bearing and the radial bearing respectively.

3. The magnetic bearing according to claim 2, wherein:
along the axial direction of the rotating shaft (5), one end of the magnetic steel (301) is connected with the axial bearing stator, and an other end of the magnetic steel (301) is connected with the radial bearing stator; and a magnetic circuit generated by the magnetic steel (301) passes through the axial bearing stator, the axial bearing rotor (501), the radial bearing rotor (502), the radial bearing stator and the magnetic steel (301) to form a bias magnetic flux loop.

4. The magnetic bearing according to claim 3, wherein:
the axial bearing stator comprises a front axial core (201), an axial winding frame (202), an axial winding (203) and a rear axial core (204), wherein a radial outer end of the front axial core (201) is connected with a radial outer end of the rear axial core (204); a first accommodating space is enclosed by a radial inner end of the front axial core (201) and a radial inner end of the rear axial core (204); the axial winding frame (202) is provided in the first accommodating space; the axial winding (203) is wound on the axial winding frame (202); and an axial control magnetic circuit generated by the axial winding (203) passes through the rear axial core (204), the axial bearing rotor (501) and the front axial core (201) to form an axial control magnetic loop.

5. The magnetic bearing according to claim 4, wherein:
the rear axial core (204) is of an annular disc-shaped structure; the front axial core (201) is also of an annular structure; the front axial core (201) comprises a first annular part (2011), a first cylindrical part (2012) and a second annular part (2013); the first cylindrical part (2012) is a cylinder; one axial end of the first cylindrical part (2012) is connected with a radial inner end of the first annular part (2011); an other axial end of the first cylindrical part (2012) is connected with a radial outer end of the second annular part (2013); an outer diameter of the first annular part (2011) is greater than an outer diameter of the second annular part (2013); an inner diameter of the first annular part (2011) is greater than an inner diameter of the second annular part (2013); and the first accommodating space is enclosed by the first cylindrical part (2012), the second annular part (2013) and the rear axial core (204).

6. The magnetic bearing according to claim 4, wherein:
the radial bearing stator comprises a radial ring (302), a radial stator core (303) and a radial winding (304), wherein the radial stator core (303) is located at an inner circumference of the radial ring (302); the radial winding (304) is wound on the radial stator core (303); and a radial control magnetic circuit generated by the radial winding (304) passes through the radial stator core (303) and the radial bearing rotor (502) to form a radial control magnetic loop.

7. The magnetic bearing according to claim 6, wherein:
the radial stator core (303) is of an annular disc-shaped structure; the radial ring (302) is also of an annular structure; the radial ring (302) comprises a third annular part (3021) and a second cylindrical part (3022); the second cylindrical part (3022) is a cylinder; one axial end of the second cylindrical part (3022) is connected with a radial outer end of the third annular part (3021); and a second accommodating space for accommodating the radial stator core (303) is enclosed by the second cylindrical part (3022) and the third annular part (3021).

8. The magnetic bearing according to claim 6, wherein:
a magnetic circuit generated by the magnetic steel (301) passes through the rear axial core (204), the axial bearing rotor (501), the radial bearing rotor (502), the radial stator core (303), the radial ring (302) and the magnetic steel (301) to form a first bias magnetic flux loop; and a magnetic circuit generated by the magnetic steel (301) passes through the rear axial core (204), the front axial core (201), the axial bearing rotor (501), the radial bearing rotor (502), the radial stator core (303), the radial ring (302) and the magnetic steel (301) to form a second bias magnetic flux loop.

9. The magnetic bearing according to any one of claims 1-8, wherein:
the bearing housing (1) is of a cylindrical structure, and comprises therein a first space (108) for accommodating the axial bearing (2) and a second space (109) for accommodating the radial bearing (3), wherein an inner diameter of an inner wall of the first space (108) is greater than an inner diameter of an inner wall of the second space (109); a step structure is formed at a connection of the first space (108) and the second space (109) and comprises a first end surface of the bearing housing (102); the axial bearing (2) abuts against the first end surface of the bearing housing (102); and the inner wall of the second space is formed as a first cylinder surface of the bearing housing (103).

10. The magnetic bearing according to claim 9, wherein:
the magnetic bearing further comprises a baffle (4); an axial end of the bearing housing (1) located at the second space (109) is provided with an annular sinking groove; a bottom of the annular sinking groove forms a second end surface of the bearing housing (105); and the baffle (4) is provided on the second end surface of the bearing housing (105).

11. The magnetic bearing according to claim 9 or 10, wherein:
when the axial bearing (2) comprises a rear axial core (204), the rear axial core (204) abuts against the first end surface of the bearing housing (102); when the radial bearing (3) comprises a radial ring (302), the radial ring (302) is connected with the first cylinder surface of the bearing housing (103); and a radial bearing positioning hole (106) is further provided in a portion of the bearing housing (1) opposite to the second space, and penetrates from an outer wall to an inner wall of the bearing housing (1).

12. The magnetic bearing according to claim 10, wherein:
a housing through hole (107) is further provided in the bearing housing (1), axially penetrates from the first end surface of the bearing housing (102) to the second end surface of the bearing housing (105), and is configured to position the axial bearing;
a housing outlet hole (101) is further provided in the bearing housing (1), and penetrates from an inner wall to an outer wall of the bearing housing (1); and
the axial bearing further comprises an axial bearing lead-out wire (206); the radial bearing further comprises a radial bearing lead-out wire (306); one end of the axial bearing lead-out wire (206) is connected with the axial winding (203), and an other end of the axial bearing lead-out wire (206) is led out of the housing outlet hole (101); and one end of the radial bearing lead-out wire (306) is connected with the radial winding (304), and an other end of the radial bearing lead-out wire (306) passes through the housing through hole (107) and the housing outlet hole (101) in sequence and is led out.

13. A magnetic bearing system, comprising the magnetic bearing according to any one of claims 1-12, and further comprising a cooling channel capable of cooling the axial bearing and the radial bearing.

14. The magnetic bearing system according to claim 13, wherein:
when the bearing housing (1) is of a cylindrical structure, and comprises therein a first space for accommodating the axial bearing (2) and a second space for accommodating the radial bearing (3): a housing cooling hole (104) is provided in the bearing housing (1) in a manner of penetrating from an outer wall to an inner wall of the bearing housing (1); and
when the axial bearing (2) comprises an axial bearing stator, and the radial bearing (3) comprises a radial bearing stator:
the cooling channel comprises a first cooling channel and a second cooling channel, the housing cooling hole (104) is opposite to and communicated with the first space, the first cooling channel comprises a first axial cooling hole and a second axial cooling hole, the first axial cooling hole axially penetrates through the axial bearing stator, and the second axial cooling hole axially penetrates through the radial bearing stator; and
the second cooling channel comprises a radial cooling hole (204-2), a third axial cooling hole and a fourth axial cooling hole, the radial cooling hole (204-2) radially penetrating through the axial bearing stator, the third axial cooling hole axially penetrating through the axial bearing rotor, and the fourth axial cooling hole axially penetrating through the radial bearing rotor.

15. The magnetic bearing system according to claim 14, wherein:
when the axial bearing stator comprises a front axial core (201), an axial winding frame (202), an axial winding (203) and a rear axial core (204), the first axial cooling holes are axially and oppositely provided in the front axial core (201), the rear axial core (204) and the axial winding frame (202); and when the radial bearing comprises a radial stator core (303) and a radial ring (302), the second axial cooling holes are axially and oppositely provided in the radial stator core (303) and the radial ring (302).

16. The magnetic bearing system according to claim 14, wherein:
when the axial bearing stator comprises a front axial core (201), an axial winding frame (202), an axial winding (203) and a rear axial core (204), the radial cooling hole (204-2) is radially provided in a portion of the rear axial core (204) opposite to the housing cooling hole (104); the radial cooling hole (204-2) penetrates from a radial outer end to a radial inner end of the rear axial core (204); and the third axial cooling hole and the fourth axial cooling hole are provided oppositely along an axial direction.
